# EUROPÄISCHE PATENTANMELDUNG

(11) **EP 4 681 905 A1**
(43) Veröffentlichungstag der Anmeldung: **21.01.2026**
(21) Anmeldenummer: 25189161.0
(22) Anmeldetag: 11.07.2025
(51) Int. Cl.: B29C 49/42

(54) **VERFAHREN UND VORRICHTUNG ZUM HERSTELLEN VON KUNSTSTOFFBEHÄLTERN AUS VORFORMLINGEN**

(30) Priorität: 15.07.2024 DE 102024120158
(71) Anmelder: KHS GmbH, 44143 Dortmund (DE)
(72) Erfinder: Klatt, Dieter, 44143 Dortmund (DE); Jaiser, Benjamin, 44143 Dortmund (DE); Baumgarte, Rolf, 44143 Dortmund (DE)
(74) Vertreter: Andrejewski - Honke Patent- und Rechtsanwälte Partnerschaft mbB

(57) **Zusammenfassung**

Die Erfindung betrifft ein Verfahren zum Herstellen eines Behälters (3) aus einem einen Innenraum (2b) aufweisenden Vorformling (2), wobei der Vorformling (2) in eine Außenform (2a) eingelegt und der Innenraum (2b) mit einem unter Überdruck stehenden Druckmedium beaufschlagt wird, sodass der Vorformling (2) zu dem Behälter (3) mit einem Behälterinnenraum (3b) umgeformt wird, wobei das unter Überdruck stehende Druckmedium anschließend aus dem Behälterinnenraum (3b) abgelassen wird. Erfindungsgemäß wird das Druckmedium beim Ablassen zumindest einem weiteren Behälter (3') zugeführt.

## Beschreibung

Die Erfindung betrifft ein Verfahren und eine Vorrichtung zum Herstellen eines Behälters aus einem einen Innenraum aufweisenden Vorformling. Der Vorformling wird dabei in eine Außenform eingelegt und der Innenraum mit einem unter Überdruck stehenden Druckmedium beaufschlagt. Durch den in dem Innenraum herrschenden Überdruck wird der Vorformling zu dem Behälter mit einem Behälterinnenraum umgeformt. Anschließend wird das unter Überdruck stehende Druckmedium aus dem Behälterinnenraum abgelassen.

Das gattungsgemäße Verfahren wird auch als Blasprozess bezeichnet. Dabei wird ein erwärmter und aus einem Kunststoffmaterial bestehender Vorformling durch den innenseitig angelegten Überdruck aufgeweitet und durch mechanischen Kontakt mit der Außenform in eine bestimmte äußere Gestalt gebracht. Der Innenraum des Vorformlings wird durch die Aufweitung zum Innenraum des Behälters, welcher auch als Behälterinnenraum bezeichnet wird.

Zur zusätzlichen Formgebung kann es vorgesehen sein, dass in dem Innenraum des Vorformlings eine Reckstange eingeführt wird, welche in Längsrichtung des Vorformlings ausgerichtet ist und mechanische Kräfte einbringt und derart den Formbildungsprozess unterstützt. Diese besondere Unterform wird auch als Streckblasprozess bezeichnet.

Zunächst muss der Vorformling auf eine Umformtemperatur erhitzt werden, bei der eine plastische Verformung des Kunststoffmaterials möglich ist. Um die im Umformprozess gewonnene äußere Gestaltung sicher beizubehalten ist jedoch anschließend eine Abkühlung des Materials erforderlich. Um große Produktionsgeschwindigkeiten mit kurzen Taktzeiten darstellen zu können, ist dafür jedoch eine aktive Kühlung erforderlich. Hierzu ist es bekannt, ein dezidiertes Kühlmedium in den Innenraum des umgeformten Behälters einzuleiten. Die Bereitstellung und Konditionierung des Kühlmediums ist jedoch technisch und energetisch aufwendig. Um die umgeformten Behälter nicht zu verunreinigen, muss das Kühlmedium aufwendig gefiltert werden. Zusammen mit der Konditionierung (Kühlung und Entfeuchtung) des Kühlmediums entsteht ein erheblicher apparativer Aufwand um - gerade bei großen Produktionsgeschwindigkeiten von mehreren 10.000 Behältern pro Stunde - eine effiziente Kühlung bewirken zu können. Je kürzer dabei die Taktzeiten sind, desto wirksamer muss die Kühlung auch sein, um in der kürzeren Zeit eine ausreichende Kühlwirkung erzielen zu können.

Vor diesem Hintergrund liegt der Erfindung die Aufgabe zugrunde, die Abkühlung von Behältern im Blasformprozess mit einfachen Mitteln und geringem energetischen Aufwand zu erhöhen. Gegenstand der Erfindung und Lösung dieser Aufgabe ist ein Verfahren nach Anspruch 1 sowie eine Vorrichtung nach Anspruch 7. Bevorzugte Ausgestaltungen sind jeweils in den abhängigen Unteransprüchen angegeben.

Ausgehend von dem gattungsgemäßen Verfahren ist erfindungsgemäß vorgesehen, dass das Druckmedium beim Ablassen zumindest einem weiteren Behälter - insbesondere dessen weiteren Behälterinnenraum - zugeführt wird. Entgegen der bisher üblichen Verwendung wird das Druckmedium - insbesondere Luft - nicht unmittelbar durch eine Entlastungsleitung an die Umgebung abgegeben, sondern zunächst zumindest einem weiteren Behälter zugeführt. Das aus dem Behälterinnenraum des Behälters abgelassene und dabei gleichzeitig entspannte Druckmedium wird somit gleichzeitig als Kühlmedium für zumindest den weiteren Behälter genutzt und dessen Behälterinnenraum zugeleitet. Dabei ist zum einen vorteilhaft, dass das bereits eingesetzte Druckmedium nicht zusätzlich gereinigt oder vorkonditioniert werden muss, da es sich bereits im Prozess befindet. Zusätzlich wird durch die Entspannung des Druckmediums eine adiabatische Abkühlung hervorgerufen, welche die kühlende Wirkung auf den weiteren Behälter verbessert.

Gemäß einer bevorzugten Ausgestaltung der Erfindung wird das Druckmedium durch mehrere Behälter konsekutiv hindurchgeführt. Das bedeutet, dass das Druckmedium über den Behälter hinaus - bei dessen Formung es als Druckmedium wirksam war - zusätzlich durch zwei oder mehr bereits zuvor geformte weitere Behälter als Kühlmedium hindurchgeführt wird. Konsekutiv bzw. sequenziell meint dabei, dass es zunächst einem zweiten Behälter, anschließend einem dritten Behälter zugeführt wird, bevor das Druck- bzw. Kühlmedium durch einen Auslass aus dem Prozess entlassen wird. Dies findet insbesondere dadurch statt, dass es durch einen Auslass dem unter Umgebungsdruck stehenden Außenbereich zugeführt wird. Die Umgebung fungiert dabei als Drucksenke. Bei der Entspannung des Druckmediums von einem anfänglichen Umformdruck von mehreren bar, insbesondere ca. 20 bis 50 bar, findet damit eine Entspannung bis zum Umgebungsdruck und eine entsprechende Abkühlung statt.

Gemäß einer besonders bevorzugten Ausgestaltung des erfindungsgemäßen Verfahrens wird zumindest einem Behälter ein Kühlmedium zugeführt. Dabei kann es sich ohne Beschränkung der Erfindung um den ersten Behälter handeln, aus dem das Druckmedium entspannt wird, den in der Strömungsreihenfolge unmittelbar nachfolgenden nächsten Behälter, einem beliebigen nachfolgenden Behälter, den letzten Behälter vor einer Drucksenke und/oder Kombinationen hieraus. Durch das zusätzlich zugeführte Kühlmedium wird eine verbesserte Kühlwirkung erzielt. Gleichzeitig kann durch die Zweit-Verwendung des Druckmediums die benötigte Menge an Kühlmedien reduziert werden.

Vorzugsweise ist weiterhin vorgesehen, dass das Druckmedium und/oder das Kühlmedium zwischen zwei Behältern zwischengekühlt wird. Hierzu weist eine zwischen zwei Behältern angeordnete Verbindungsleitung vorzugsweise einen Zwischenkühler auf. So kann die Kühlwirkung weiter verbessert werden. Durch die Übertragung der Kühlung auf das durchströmende Druckmedium bzw. mit einem Kühlmedium gemischten Druckmedium findet eine verbesserte Kühlwirkung statt. Das den Innenraum des Behälters durchströmende Medium hat so aufgrund einer verringerten Temperatur einen erhöhten Kühleffekt. Eine aufwändige Kühlung der Außenform kann dadurch entfallen.

Besonders bevorzugt ist in dem Behälter und/oder in dem weiteren Behälter ein in den jeweiligen Behälterinnenraum ragender Dorn, vorzugsweise eine Reckstange angeordnet. Das Druckmedium und/oder das Kühlmedium können besonders bevorzugt durch den Dorn (bzw. die Reckstange) in den Behälterinnenraum des Behälters bzw. in den weiteren Behälterinnenraum des weiteren Behälters eingeleitet oder daraus abgelassen werden. Bei einem Behälter, welcher lediglich durch eine Mündung zugänglich ist, kann dadurch eine axiale Strömung (in Richtung der Längserstreckungsachse) erzeugt werden. Dadurch verteilt sich die Kühlwirkung besser über die gesamte Erstreckung des Behälters.

Gegenstand der Erfindung ist auch eine Vorrichtung zum Umformen eines Vorformlings zu einem Behälter. Die Vorrichtung weist zumindest eine erste Umformstation und eine zweite Umformstation auf. Die erste Umformstation umfasst eine erste Außenform mit einem ersten Anschlussbereich zur Aufnahme einer Öffnung eines Vorformlings oder Behälters. Analog weist die zweite Umformstation eine zweite Außenform mit einem zweiten Anschlussbereich zur Aufnahme eines weiteren Vorformlings oder weiteren Behälters auf. Weiterhin ist eine Druckquelle zur Bereitstellung eines unter Druck stehenden Druckmediums vorgesehen. Ferner sind eine die Druckquelle mit dem ersten Anschlussbereich verbindende und ein erstes Zuleitungsventil aufweisende erste Zuleitung und eine die Druckquelle mit dem zweiten Anschlussbereich verbindende und ein zweites Zuleitungsventil aufweisende zweite Zuleitung vorgesehen. Die Druckquelle kann ohne Beschränkung der Erfindung ein- oder mehrteilig ausgebildet sein. Weiterhin sind eine Drucksenke, eine den ersten Anschlussbereich mit der Drucksenke verbindende und ein erstes Entlastungsventil aufweisende erste Entlastungsleitung und eine den zweiten Anschlussbereich mit der Drucksenke verbindende und ein zweites Entlastungsventil aufweisende zweite Entlastungleitung ausgebildet.

Durch den gattungsgemäßen Aufbau ist es möglich, einen (erwärmten) Vorformling in der Außenform einer Umformstation derart aufzunehmen, dass eine an den Innenraum des Vorformlings anschließende Mündung in dem Anschlussbereich angeordnet ist. Durch Betätigung des Zuleitungsventils wird in einem Blasprozess das unter Druck stehende Druckmedium über die Zuleitung und den Anschlussbereich in den Innenraum des Vorformlings geleitet, um diesen aufzuweiten. Nach Erreichen des vorgesehenen Drucks bzw. der vorgesehenen Aufweitung wird das Zuleitungsventil geschlossen und nach dem Abschluss der Umformung das Entlastungsventil geöffnet, um das unter Druck stehende Druckmedium durch die Entlastungsleitung der Drucksenke zuzuführen.

Davon ausgehend ist erfindungsgemäß vorgesehen, dass der erste Anschlussbereich mit dem zweiten Anschlussbereich durch zumindest eine ein erstes Durchleitungsventil aufweisende erste Verbindungsleitung verbunden ist. Dadurch wird die Durchführung des erfindungsgemäßen Verfahrens ermöglicht. Anstatt das Druckmedium über die erste Entlastungsleitung unmittelbar der Drucksenke zuzuführen, bleibt das erste Entlastungsventil geschlossen und wird das Druckmedium durch Öffnung des ersten Durchleitungsventils über die Verbindungsleitung dem zweiten Anschlussbereich und damit dem in der zweiten Umformstation aufgenommenen bereits umgeformten weiteren Behälter zugeleitet. Die abschließende Ableitung und Druckentlastung kann dann über die zweite Entlastungsleitung der zweiten Umformstation oder gegebenenfalls bei in-Reihe-Schaltung von mehreren Umformstationen einer der folgenden Umformstationen realisiert werden.

Die Anschlussbereiche der Umformstation sind jeweils so ausgebildet, dass die darin mündenden Leitungen (Zuleitung, Entlastungsleitung, Verbindungsleitung) jeweils strömungstechnisch unmittelbar mit dem Innenraum des jeweiligen Vorformlings oder Behälters verbunden sind.

Gemäß einer besonders bevorzugten Ausgestaltung ist die erste Verbindungsleitung zumindest teilweise durch die erste Entlastungsleitung gebildet. Damit verlaufen die beiden Leitungen zumindest teilweise parallel und können einen gemeinsamen Anschluss am Anschlussbereich bzw. am Innenraum des Behälters aufweisen. Dies ist vor allem deswegen zweckmäßig, da sowohl über die Entlastungsleitung als auch über die Verbindungsleitung eine abschließende Strömungsrichtung aus dem ersten Anschlussbereich erfolgt.

Besonders bevorzugt bildet das erste Entlastungsventil gleichzeitig das erste Durchleitungsventil. Dies ist vor allem deshalb zweckmäßig, da die Ableitung des Druckmediums und gegebenenfalls Kühlmediums aus einem Behälter dann zentral an einem Punkt gesteuert werden kann.

Vorzugsweise sind das erste Entlastungsventil und/oder das erste Durchleitungsventil als 3/3-Wege-Ventil ausgebildet. Dieses kann dadurch vorzugsweise in den drei Stellungen geschlossen, Ableitung über die Entlastungsleitung oder Weiterleitung über die Verbindungsleitung gesteuert werden. Auch sind Ausführungen denkbar, bei denen gleichzeitig eine Ableitung über die Entlastungsleitung und die Verbindungsleitung erfolgen kann.

Besonders bevorzugt ist die Vorrichtung mit einer Vielzahl von Umformstationen ausgebildet, welche mit jeweils einer zugeordneten und jeweils einen Anschlussbereich aufweisenden Außenform, mit einer zugeordneten Zuleitung mit jeweils einem Zuleitungsventil und mit jeweils einer Entlastungsleitung mit einem Entlastungsventil ausgebildet sind. Die Umformstationen sind jeweils paarweise aufeinanderfolgend in Reihe ausgestaltet, wobei jeweils der Anschlussbereich einer Außenform mit dem Anschlussbereich der folgenden Außenform durch eine Verbindungsleitung mit einem Durchleitungsventil verbunden ist. Dadurch kann das erfindungsgemäße Verfahren nachfolgend bei mehreren Behältern aufeinanderfolgend genutzt werden.

Im Zuge des Erfindungsgedankens wird ein erwärmter Vorformling zunächst in einer Außenform aufgenommen und durch Öffnen des Zuleitungsventils mit dem Druckmedium beaufschlagt und aufgeweitet. Nachfolgend wird aus dem umgeformten Behälter das Druckmedium wieder abgelassen und zwar erfindungsgemäß über die Verbindungsleitung in der nächst folgenden Umformstation. Zu einem späteren Zeitpunkt ist der Behälter an die nachfolgende Position weitergeleitet worden, sodass dieser seinerseits von einem nachfolgend produzierten Behälter durch dort abgelassen Druckmedium beaufschlagt wird. So wird die Behälterstation immer weitergeleitet und der jeweilige Behälter wird nachfolgend in Reihe durch Druckmedium aus einem nachfolgend stattgefunden Umformprozess durchspült.

Besonders bevorzugt sind die mehreren Umformstationen umlaufend an einem drehbaren Träger angeordnet. Dadurch bildet sich eine endlos aufeinanderfolgende Aneinanderreihung der Umformstationen, welche jeweils das Aufnehmen eines Vorformlings, umformen, entlasten und anschließend durchspült-werden von dem Druckmedium durchlaufen, bis diese aus den Außenformen entnommen werden und die Außenformen damit anschließend wieder zur Verfügung stehen um einen erneuten Durchlauf zu befolgen.

Weiterhin ist vorzugsweise vorgesehen, dass die Verbindungsleitung zumindest teilweise durch einen Abschnitt der zweiten Zuleitung gebildet ist. Auch hier hat es sich als vorteilhaft gezeigt, den Einleitungspunkt an dem Anschlussbereich zu vereinheitlichen. Hierbei kann insbesondere vorgesehen sein, dass das Druckmedium, Kühlmedium, bzw. durchgeleitete ehemalige Druckmedium an einem Punkt, insbesondere durch eine hohle Reckstange eingeleitet wird.

Besonders bevorzugt ist vorgesehen, dass die Verbindungsleitung mit einem Zwischenkühler ausgestattet ist. Der Zwischenkühler erlaubt ein erneutes Abkühlen des Druckmediums und/oder Kühlmediums zwischen der Entnahme aus einem Behälter und dem Einleiten in den nachfolgenden Behälter.

Das Druckmedium bzw. Kühlmedium ist bevorzugt als Luft oder technisch reines Gas, z. B. Stickstoff ausgebildet.

Gemäß einer bevorzugten Ausgestaltung der Erfindung sind die Zuleitungsventile, die Entlastungsventile und/oder die Durchleitungsventile mit einer kontinuierlichen Öffnung- und Schließ-Charakteristik ausgestattet. Es erfolgt damit kein plötzliches Auf- und Zuschalten, sondern der jeweilige Strömungsfluss wird kontinuierlich freigegeben bzw. unterbrochen. Dadurch können Druckstöße innerhalb des Systems vermieden werden.

Zweckmäßigerweise sind in der Zuleitung, der Entlastungsleitung und/oder der Verbindungsleitung Druckspeicher vorgesehen. Diese können zum Ausgleich und zur Vergleich Mäßigung der jeweiligen Strömungsflüsse dienen.

Die Erfindung wird nachfolgend anhand von lediglich einer ein Ausführungsbeispiel darstellenden Figur erläutert. Diese zeigt schematisch den eine erfindungsgemäße Vorrichtung und gleichzeitig Verfahrensablauf des erfindungsgemäßen Verfahrens.

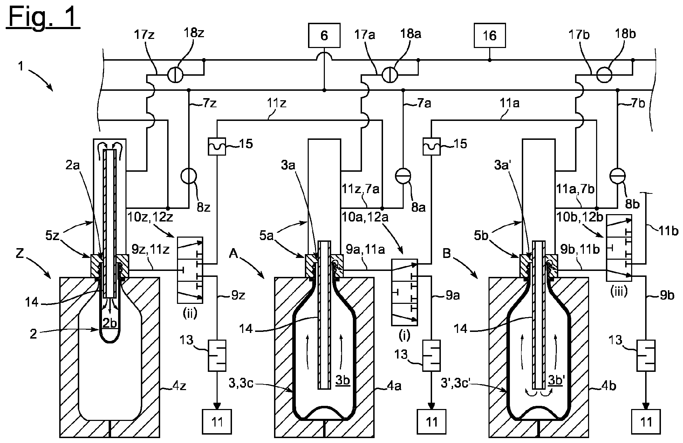

Die Fig. 1 zeigt eine erfindungsgemäße Vorrichtung 1 zum Umformen eines Vorformlings 2 zu einem Behälter 3 mit einer ersten Umformstation A und einer zweiten Umformstation B. Die erste Umformstation A weist eine erste Außenform 4a mit einem ersten Anschlussbereich 5a auf. In dem dargestellten Fall ist der in der ersten Außenform 4a, aufgenommene Behälter 3 bereits vollständig expandiert. Der Behälter 3 weist dabei eine Mündung 3a auf mit der er an den ersten Anschlussbereich 5a derart angeschlossen ist, dass dieser mit dem Behälterinnenraum 3b verbunden ist. In der dargestellten Figur hat der Behälter 3 den Umformungsschritt soeben abgeschlossen und befindet sich noch in einem erwärmten Zustand, in dem die Stabilität der Seitenwand 3c noch nicht vollständig sichergestellt ist.

In der zweiten Umformstation B, welche eine zweite Außenform 4b mit einem zweiten Anschlussbereich 5b aufweist, ist ein weiterer Behälter 3' mit einem weiteren Behälterinnenraum 3b' aufgenommen und mit seiner Mündung 3a' an den dortigen Anschlussbereich 5b angeschlossen. Der weitere Behälter 3', wurde einem vorangegangenen Expansionsschritt umgeformt und hatte daher bereits eine größere Zeitspanne zur Abkühlung zur Verfügung.

Die erfindungsgemäße Vorrichtung 1 weist weiterhin eine Druckquelle 6 auf, welche ein unter Druck stehendes Druckmedium zu Verfügung stellt. Der erste Anschlussbereich 5a ist dabei über eine erste Zuleitung 7a mit der Druckquelle 6 verbunden und über ein erstes Zuleitungsventil 8a steuerbar. In analoger Weise ist der zweite Anschlussbereich 5b über eine zweite Zuleitung 7b mit der Druckquelle 6 verbunden, welche ein zweites Zuleitungsventil 8b aufweist.

Außerdem ist der Anschlussbereich 5a über eine erste Entlastungsleitung 9a, welche ein erstes Entlastungsventil 10a aufweist, mit einer Drucksenke 11 verbunden, welche im Ausführungsbeispiel durch die Umgebung bereitgestellt wird. Demgegenüber kann die Druckquelle 6 Luft mit einem Überdruck von ca. 30 bar zur Verfügung stellen, während sich die Drucksenke 11 auf Umgebungsdruck, d. h. ungefähr 1 bar befindet. Analog zur ersten Entlastungsleitung 9a ist der zweite Anschlussbereich 5b durch eine zweite Entlastungsleitung 9b über ein zweites Entlastungsventil 10b mit der Drucksenke 11 verbunden.

Erfindungsgemäß ist der erste Anschlussbereich 5a mit dem zweiten Anschlussbereich 5b über eine erste Verbindungsleitung 11a verbunden, welche ein erstes Durchleitungsventil 12a aufweist.

In dem Ausführungsbeispiel ist das erste Durchleitungsventil 12a gleichzeitig auch als erstes Entlastungsventil 10a ausgebildet und als 3/3-Wege-Ventil ausgestaltet. Dieses kann zwischen insgesamt drei Stellungen i, ii und iii geschaltet werden. In der Stellung i wird der erste Anschlussbereich 5a über die Verbindungsleitung 11a mit dem zweiten Anschlussbereich 5b verbunden. In der zweiten Stellung sind sämtliche Anschlüsse blockiert, sodass kein Fluss stattfinden kann. In der dritten Stellung iii verbindet das Ventil 10a, 12b den ersten Anschlussbereich 5a mit der Drucksenke 11 über eine Entlastungsdrossel 13.

Weiterhin ist im Ausführungsbeispiel vorgesehen, dass die erste Verbindungsleitung 11a teilweise durch einen Abschnitt der ersten Entlastungsleitung 9a und teilweise durch einen Abschnitt der zweiten Zuleitung 7b gebildet ist. Anstelle eines Zweifach-Wechselventils kann auch ein Drei-Wege-Hahn - gegebenenfalls in Verbindung mit zumindest einem Rückschlagventil - verwendet werden.

Das dargestellte Ausführungsbeispiel der erfindungsgemäßen Vorrichtung 1 ist mit einer Vielzahl von Umformstation A, B, ..., Z ausgestaltet, welche an einem gemeinsamen Träger umlaufen und endlos in Reihe angeordnet sind. In der Figur ist außerdem angedeutet, dass dort eine letzte Umformstation Z mit einer letzten Außenform 4z, einem letzten Anschlussbereich 5z ausgebildet ist. Die Erfindung ist dabei nicht auf eine bestimmte Anzahl von Umformstationen A,..., Z festgelegt; vielmehr bildet die letzte Umformstation Z diejenige Umformstation, welche vor der ersten Umformstation A angeordnet ist in gleicher Weise, wie die erste Umformstation A vor der zweiten Umformstation B ausgebildet ist.

Entsprechend ist der letzte Anschlussbereich 5z über eine letzte Zuleitung 7z mit einem letzten Zuleitungsventil 8z an die Druckquelle 6 angeschlossen und ferner über eine letzte Entlastungsleitung 9z mit der Drucksenke 11 verbunden, welche ein letztes Entlastungsventil 10z aufweist, sowie über eine letzte Verbindungsleitung 11z mit dem ersten Anschlussbereich 5a. Zur Steuerung ist weiterhin ein kombiniertes Entlastung-/Durchleitungs-Ventil 10z, 12z angeordnet.

Das erfindungsgemäße Verfahren lässt sich durch die Abfolge der Umformstation A, B, Z erläutern, da diese gleichfalls die zeitliche Abfolge darstellen. Der erwärmte Vorformling 2 welcher eine in dem letzten Anschlussbereich 5z aufgenommene Öffnung 2a sowie einen daran anschließenden Innenraum 2b aufweist, wurde zuvor in die letzte Außenform 4z eingelegt und diese geschlossen. Durch Öffnen des letzten Zuleitungsventils 8z kann das unter Druck stehende Druckmedium von der Druckquelle 6 über die letzte Zuleitung 7z und den letzten Anschlussbereich 5z in den Innenraum 2b des Vorformlings 2 einströmen. Durch den dadurch induzierten Überdruck sowie die gleichzeitig einfahrende Reckstange 14 wird der Vorformling 2 zu einem Behälter 3 umgeformt. Um einen Druckverlust zu vermeiden, ist das letzte Entlastungs-/Durchflussventil 10z, 12z in der zweiten vollständig sperrenden Stellung ii.

Erfindungsgemäß ist nun vorgesehen, dass in einem nächsten Schritt - dargestellt in der ersten Umformstation A - das in dem Behälterinnenraum 3b des Behälters 3 enthaltene Druckmedium nur nicht unmittelbar über die Entlastungsleitung 9a an die Drucksenke 11 abgegeben wird, sondern erfindungsgemäß über das erste Durchleitungsventil 12a in der ersten Stellung i und die erste Verbindungsleitung 11a zunächst dem weiteren Behälter 3' zugeführt wird. Der zweite Anschlussbereich 5b ist dabei derart ausgestaltet, dass die erste Verbindungsleitung 11a gemeinsam mit der zweiten Zuleitung 7b an den Verbindungsbereich 5b angeschlossen ist, dass das dort eintretende Druckmedium über die Reckstange 14 in einen unteren Bereich des zweiten Behälters 3' eingeleitet wird. Dadurch entsteht eine axiale Strömung, welche die Innenseite der Seitenwand 3c' des zweiten Behälters 3' kühlt. Um die Kühlwirkung weiter zu verbessern ist in den Verbindungsleitungen 11a, 11b, 11z jeweils ein Zwischenkühler 15 ausgebildet.

Anschließend wird das aus dem zweiten Anschlussbereich 5b austretende Druckmedium über das in der dritten Stellung iii befindliche zweite Entlastungsventil 10b und die Entlastungsdrossel 13 an die Umgebung abgegeben. Ebenso könnte das Druckmedium über die zweite Verbindungsleitung 11b an ein oder mehrere weitere Behälter weitergeleitet werden.

Optional kann zusätzlich vorgesehen sein, dass über eine Kühlmittelvorlage 16 ein Kühlmedium bereitgestellt wird. Die Kühlmittelvorlage 16 ist über eine erste Kühlleitung 17a und ein erstes Kühlventil 18a mit dem Anschlussbereich 5a der ersten Umformstation verbunden. Im Ausführungsbeispiel ist das zweite Kühlventil 18b geöffnet, wodurch zusätzlich zu dem entlasteten Druckmedium auch über eine zweite Kühlleitung 17b das Kühlmedium in den Anschlussbereich der zweiten Umformstation B eingeführt werden kann.

### Bezugszeichenliste:

- 1: Vorrichtung
- 2: Vorformling
- 2a: Öffnung
- 2b: Innenraum
- 3, 3': Behälter
- 3a, 3a': Mündung
- 3b, 3b': Behälterinnenraum
- 3c, 3c': Seitenwand
- 4a, 4b, 4z: erste, zweite, letzte Außenform
- 5a, 5b, 5z: erster, zweiter, letzter Anschlussbereich
- 6: Druckquelle
- 7a, 7b, 7z: erste, zweite, letzte Zuleitung
- 8a, 8b, 8z: erstes, zweites, letztes Zuleitungsventil
- 9a, 9b, 9z: erste, zweite, letzte Entlastungsleitung
- 10a, 10b, 10z: erstes, zweites, letztes Entlastungsventil
- 11: Drucksenke
- 11a, 11b, 11z: erste, zweite, letzte Verbindungsleitung
- 12a, 12b, 12z: erstes, zweites, letztes Durchleitungsventil
- 13: Entlastungsdrossel
- 14: Reckstange
- 15: Zwischenkühler
- 16: Kühlmittelvorlage
- 17a, 17b, 17z: erste, zweite, letzte Kühlleitung
- 18a, 18b, 18z: erstes, zweites, letztes Kühlventil
- A-Z: Umformstation
- i, ii, iii: erste, zweite, dritte Stellung

## Patentansprüche

1. Verfahren zum Herstellen eines Behälters (3) aus einem einen Innenraum (2b) aufweisenden Vorformling (2), wobei der Vorformling (2) in eine Außenform (4a) eingelegt und der Innenraum (2b) mit einem unter Überdruck stehenden Druckmedium beaufschlagt wird, sodass der Vorformling (2) zu dem Behälter (3) mit einem Behälterinnenraum (3b) umgeformt wird, wobei das unter Überdruck stehende Druckmedium anschließend aus dem Behälterinnenraum (3b) abgelassen wird, **dadurch gekennzeichnet, dass** das Druckmedium beim Ablassen zumindest einem weiteren Behälter (3') zugeführt wird.

2. Verfahren nach dem vorangegangenen Anspruch, **dadurch gekennzeichnet, dass** das Druckmedium durch mehrere Behälter (3, 3') konsekutiv hindurchgeführt wird.

3. Verfahren nach einem der vorangegangenen Ansprüche, **dadurch gekennzeichnet, dass** das Druckmedium abschließend einer Drucksenke (11) zugeleitet wird, insbesondere in die Umgebung abgelassen wird.

4. Verfahren nach einem der vorangegangenen Ansprüche, **dadurch gekennzeichnet, dass** zumindest einem Behälter (3, 3') ein Kühlmedium zugeführt wird.

5. Verfahren nach einem der vorangegangenen Ansprüche, **dadurch gekennzeichnet, dass** das Druckmedium und/oder das Kühlmedium zwischen zwei Behältern (3, 3') zwischengekühlt werden.

6. Verfahren nach einem der vorangegangenen Ansprüche, **dadurch gekennzeichnet, dass** in dem Behälter (3) und/oder dem weiteren Behälter (3') ein in den jeweiligen Behälterinnenraum (3b, 3b') ragender Dorn, vorzugsweise eine Reckstange (14) angeordnet ist und dass das Druckmedium und/oder das Kühlmedium durch den Dorn zugeführt und/oder abgelassen wird.

7. Vorrichtung (1) zum Umformen eines einen Innenraum (2b) aufweisenden Vorformlings (2) zu einem Behälter (3) mit zumindest einer ersten Umformstation (A) und mit einer zweiten Umformstation (B),
wobei die erste Umformstation (A) eine erste Außenform (4a) mit einem ersten Anschlussbereich (5a) zur Aufnahme einer Öffnung (2a) eines Vorformlings (2) oder Mündung (3a) eines Behälters (3) aufweist,
wobei die zweite Umformstation (B) eine zweite Außenform (4b) mit einem zweiten Anschlussbereich (5b) zur Aufnahme einer Öffnung (2a') eines Vorformlings (2) oder Mündung (3a') eines Behälters (3') aufweist,
mit einer Druckquelle (6) zur Bereitstellung eines unter Druck stehenden Druckmediums,
mit einer die Druckquelle (6) mit dem ersten Anschlussbereich (5a) verbindenden und ein erstes Zuleitungsventil (8a) aufweisenden ersten Zuleitung (7a),
mit einer die Druckquelle (6) mit dem zweiten Anschlussbereich (5b) verbindenden und ein zweites Zuleitungsventil (8b) aufweisenden zweiten Zuleitung (7b),
mit einer Drucksenke (11),
mit einer den ersten Anschlussbereich (5a) mit der Drucksenke (11) verbindenden und ein erstes Entlastungsventil (10a) aufweisenden ersten Entlastungsleitung (9a) und
mit einer den zweiten Anschlussbereich (5b) mit der Drucksenke (11) verbindenden und ein zweites Entlastungsventil (10b) aufweisenden zweiten Entlastungsleitung (9b),
**dadurch gekennzeichnet,**
**dass** der erste Anschlussbereich (5a) mit dem zweiten Anschlussbereich (5b) durch zumindest eine ein erstes Durchleitungsventil (12a) aufweisende erste Verbindungsleitung (11a) verbunden ist.

8. Vorrichtung (1) nach dem vorangegangenen Anspruch, **dadurch gekennzeichnet, dass** die erste Verbindungsleitung (11a) zumindest teilweise durch die erste Entlastungsleitung (9a) gebildet ist.

9. Vorrichtung (1) nach einem der vorangegangenen Ansprüche, **dadurch gekennzeichnet, dass** das erste Entlastungsventil (10a) gleichzeitig das erste Durchleitungsventil (12a) bildet.

10. Vorrichtung (1) nach einem der vorangegangenen Ansprüche, **dadurch gekennzeichnet, dass** das erste Entlastungsventil (10a) und/oder das erste Durchleitungsventil (12a) als 3/3-Wege-Ventil ausgebildet sind.

11. Vorrichtung (1) nach einem der vorangegangenen Ansprüche, **dadurch gekennzeichnet, dass** die erste Verbindungsleitung (11a) zumindest teilweise durch einen Abschnitt der zweiten Zuleitung (7b) gebildet ist.

12. Vorrichtung (1) nach einem der vorangegangenen Ansprüche, **dadurch gekennzeichnet, dass** diese eine Vielzahl von Umformstationen (A-Z) mit jeweils einer zugeordneten und jeweils ein Anschlussbereich (5a, 5b, 5z) aufweisenden Außenform (4a, 4b, 4z), einer zugeordneten Zuleitung (7a, 7b 7z) mit jeweils einem Zuleitungsventil (8a, 8b, 8z) und jeweils einer Entlastungsleitung (9a, 9b, 9z) mit einem Entlastungsventil (10a, 10b, 10z) ausgebildet sind und dass die Umformstationen (A-Z) jeweils paarweise aufeinanderfolgend in Reihe geschaltet sind, wobei jeweils der Anschlussbereich (5a, 5b, 5z) einer Außenform (4a, 4b, 4z) mit dem Anschlussbereich (5a, 5b, 5z) der folgenden Umformstation (A-Z) durch eine Verbindungsleitung (11a, 11b, 11z) mit einem zugeordneten Durchleitungsventil (12a, 12b, 12z) verbunden ist.

13. Vorrichtung (1) nach einem der vorangegangenen Ansprüche, **dadurch gekennzeichnet, dass** die Umformstationen (A-Z) an einem drehbaren Träger umlaufend angeordnet sind.

14. Vorrichtung (1) nach einem der vorangegangenen Ansprüche, **dadurch gekennzeichnet, dass** die Verbindungsleitung (11a, 11b, 11z) mit einem Zwischenkühler (15) ausgestattet ist.
